# EUROPEAN PATENT APPLICATION

(11) **EP 4 403 810 A1**
(43) Date of publication of application: **24.07.2024**
(21) Application number: 23152552.8
(22) Date of filing: 19.01.2023
(51) Int. Cl.: F16K 31/06, F03C 1/04, F16K 31/10, F03C 1/34, F03C 1/053, F04B 1/0452, F04B 1/053, F04B 7/00

(54) **ELECTRONICALLY ACTUATED VALVE ASSEMBLY**

(71) Applicant: Danfoss Scotland Limited, Edinburgh EH3 9DQ (GB)
(72) Inventor: The designation of the inventor has not yet been filed
(74) Representative: Hindles Limited

(57) **Abstract**

An aspect of the invention provides an electronically actuated valve assembly (100) comprising: a valve member (110) moveable between a first position corresponding to a first valve state and a second position corresponding to a second valve state; a first resiliently deformable member (140); a first coil (125) configured to cause the valve member (110) to exhibit a first positional default; a first armature (120) moveable relative to the first coil (125) to thereby cause movement of the valve member (110); and a second armature (121) movable relative to the first coil (125) and arranged to cause movement of the valve member (110) via the first resiliently deformable member (140), wherein, in a first operating configuration of the valve assembly: the first coil (125) is configured to, on application of a first coil current therethrough as a first control signal, exert a first electromagnetic force on the second armature (121) to thereby cause the first resiliently deformable member (140) to cause the valve member (110) to exhibit the first positional default; and the valve assembly is configured to, on application of a second control signal, exert a second resultant electromagnetic force on the first armature (120) to thereby cause the valve member (110) to exhibit the second positional default, and wherein, in a second operating configuration of the valve assembly: the valve assembly is configured to cause the valve member (110) to exhibit a third positional default, different from the first positional default.

## Description

### Field of the invention

The present invention relates to an electronically actuated valve assembly, a method of operating an electronically actuated valve assembly, a controller of a valve assembly and a hydraulic fluid machine.

### Background to the invention

The flow of hydraulic fluid through a hydraulic machine to cause pumping and/or motoring relies upon electronically controlled valves which must open or close to controllably permit or prevent flow of hydraulic fluid into or out of working chambers of the hydraulic machine. The electromagnetic valves are actuated using control signals. The signals are received by the electromagnetic valves, typically solenoid valves. However, there are many reasons why a controller may fail to validly control actuation of the electromagnetic valves. For example, there may be a loss of power, loss of encoder signal or other signal or a software glitch. In some applications that use electronically controlled valves, it is appropriate for the hydraulic machine to stop producing flow in case of a failure or fault. However, in other applications that use electronically controlled valves, it is important to maintain production of flow in the hydraulic machine for safety and/or reliability purposes.

It is in this context that the present disclosure has been devised.

### Summary of the invention

According to an aspect of the present invention there is provided an electronically actuated valve assembly comprising: a valve member moveable between a first position corresponding to a first valve state and a second position corresponding to a second valve state; a first resiliently deformable member; a first coil configured to cause the valve member to exhibit a first positional default; a first armature moveable relative to the first coil to thereby cause movement of the valve member; and a second armature movable relative to the first coil and arranged to cause movement of the valve member via the first resiliently deformable member. In a first operating configuration of the valve assembly: the first coil is configured to, on application of a first coil current therethrough as a first control signal, exert a first electromagnetic force on the second armature to thereby cause the first resiliently deformable member to cause the valve member to exhibit the first positional default; and the valve assembly is configured to, on application of a second control signal, exert a second resultant electromagnetic force on the first armature to thereby cause the valve member to exhibit a second positional default. In a second operating configuration of the valve assembly: the valve assembly is configured to cause the valve member to exhibit a third positional default, different from the first positional default.

By positional default we mean a default position, said position is caused by forces exerted on a member (e.g. the valve member and/or the first armature and/or the second armature). The forces, when resolved, cause a resultant force which acts in a particular direction or acts to urge or bias the member towards a particular position. When a member is caused to exhibit a positional default, this means that the positional default occurs and is demonstrated (i.e. by a biasing force, if present). The positional default may be demonstrated by a visible change in the member (e.g. motion) or with no particular outwardly visible result (e.g. lack of motion).

Another aspect of the invention provides a method of operating an electronically actuated valve assembly. The valve assembly comprises: a valve member moveable between a first position corresponding to a first valve state and a second position corresponding to a second valve state; a first resiliently deformable member; a first coil configured to cause the valve member to exhibit a first positional default; a first armature moveable relative to the first coil to thereby cause movement of the valve member; and a second armature movable relative to the first coil and arranged to cause movement of the valve member via the first resiliently deformable member. The method further comprises: operating the valve assembly in a first operating configuration; and operating the valve assembly in a second operating configuration. Operating the valve assembly in the first operating configuration comprises: exerting a first electromagnetic force on the second armature, thereby causing the first resiliently deformable member to cause the valve member to exhibit the first positional default, by applying a first coil current to the first coil as a first control signal; and exerting a second resultant electromagnetic force on the first armature, thereby causing the valve member to exhibit a second positional default, by applying a second control signal. Operating in the second operating configuration comprises: causing the valve member to exhibit a third positional default, different from the first positional default.

The valve assembly may be part of a hydraulic apparatus. The hydraulic apparatus may comprise at least one working chamber in fluid communication with a manifold (e.g. a high-pressure manifold or a low-pressure manifold). Fluid (e.g. a hydraulic liquid, such as oil) flows during pumping from the low-pressure manifold to the working chamber during an intake stroke or from the working chamber to the high-pressure manifold during an exhaust stroke.

The valve assembly may be electronically actuated in that operation of the first coil, the first armature and the second armature, and therefore movement of the valve member, is controlled either directly or indirectly by electronic control signals. The valve assembly may be a solenoid valve assembly.

It may be that the first positional default exhibited by the valve member when the first control signal is applied is the first position. It may be that the second positional default exhibited by the valve member when the second control signal is applied in the second position. It may be that the first valve state is an open state and the second valve state is a closed state or the first valve state is a closed state and the second valve state is an open state.

Typically, the first valve state is different to the second valve state.

The first position of the valve member may be a position of full extent of travel of the valve member (e.g. open position). The second position of the valve member may be another position of full extent of travel of the valve member (e.g. closed position). The electronic control signals which control operation of the first coil may be and are typically applied when the valve assembly operates in the first operating configuration.

In the first operating configuration, depending on the first control signal, the valve member is caused to exhibit a first positional default. The term "positional default" of the valve member may herein be intended to refer to a default position of the valve member towards which restoring forces (which may be electromagnetic or mechanical) will act if the valve member is acted upon by an external force which moves the valve member away from the default position. The term "positional default" of the valve member may herein be intended to refer to an unbiased positional default upon which no opposing or restoring forces will act if the valve member is acted upon by a force which causes movement of the valve member away from its position.

Typically, applying the first coil current to the first coil causes a first electromagnetic force to be exerted on the second armature because the flow of current through the first coil creates an electromagnetic field which acts on the second armature, as a result of which the valve member exhibits the first positional default.

When the first control signal is applied, the second armature and the first resiliently deformable member may cause the valve member to exhibit a first positional default, which may be the first position corresponding to the first valve state, which may be the open state. That is, when the first control signal is applied, the first coil may exert a first electromagnetic force on the second armature. The second armature may move in a first direction, thereby causing deformation of the first resiliently deformable member. For example, the second armature may move downwards, towards the valve member, to cause compression of the first resiliently deformable member. The first resiliently deformable member may be configured to cause the valve member to exhibit the first positional default. That is, when the first resiliently deformable member is deformed (e.g. compressed), the valve member may be caused to exhibit the first positional default.

It may be that the movement of the second armature and deformation of the first resiliently deformable member causes movement of the first armature, which is typically located between the second armature and the valve member, thereby causing the valve member to exhibit the first positional default. The first electromagnetic force may cause the second armature to move towards the first armature. As a result, the first resiliently deformable member (between the first and second armatures) may be resiliently deformed. For example, the first armature may be coupled to the valve member, such that movement of the first armature in the first direction causes the valve member to exhibit the first positional default. It may be that when the first control signal is applied without the second control signal, and when the valve member is subject to an external force, the restoring force (e.g. the mechanical biasing force from the first resiliently deformable member and the first electromagnetic force) acting (e.g. indirectly) upon the valve member is directed towards the first position.

Typically, the first resiliently deformable member may be positioned between the first armature and the second armature. In some examples, the first resiliently deformable member is a spring, which may be resiliently deformed (e.g. compressed) when the valve member exhibits the first (and/or second) positional default.

It may be that the first armature and the second armature are moveable relative to one another. Typically, the second armature may be caused to move by the first coil exerting a force on the second armature. It may be that the first coil is configured to, on application of a first coil current therethrough, exert a resultant electromagnetic force on the second armature to thereby cause urging of the valve member towards the first position or towards the second position. The force exerted on the first and second armatures may act in different directions such that the resultant force acts in a direction associated with the first or second positional default. The force exerted on the second armature may act in a direction comprising at least one component opposite to the direction of the force exerted on the first armature.

When the second control signal is applied, the valve member may move away from the first positional default (e.g. the first position) and may move towards the second positional default (e.g. the second position). When the second control signal is applied, the second resultant electromagnetic force may be exerted on the first armature. It may be that the second resultant electromagnetic force causes movement of the first armature to cause the valve member to exhibit the second positional default. The first armature may be coupled to the valve member. The second resultant electromagnetic force may cause movement of the first armature in a second direction, which may be an opposing direction the first direction. The movement of the first armature in the second direction may cause deformation of the first resiliently deformable member, which may be positioned between the first and second armatures.

It may be that when the second control signal is applied (which may be in combination with the first control signal) and the valve member is subject to an external force, the restoring force (e.g. the mechanical biasing force from the first resiliently deformable member and the second resultant electromagnetic force) acting upon the valve member is directed towards the second position.

Typically, the second and third positional defaults are different from the first positional default in that there is no restoring force acting towards the same position as the restoring force of the first positional default. Typically, when the first positional default is an unbiased positional default such that no restoring force acts on the valve member, the second and third positional defaults are different from the first positional default in that there is a restoring force acting towards the second and third positional defaults, respectively.

In the second operating configuration, the valve member may be moveable into the position depending, at least in part, on flow forces acting on the valve member. The flow forces may be caused by fluid (e.g. hydraulic fluid such as oil) flowing to or from the low or high pressure manifold into or out of the working chamber with which the valve assembly is associated. When the fluid flows in and out of the working chamber past and adjacent to a valve member, the flow of fluid exerts a force ('flow force') on the respective valve member. Typically, when the third positional default may be an unbiased positional default such that no restoring force acts on the valve member, the first and second positional defaults are different from the third positional default in that there is a restoring force acting towards the first and second positional defaults, respectively.

Advantageously, operation of the valve assembly in the second operating configuration, depending on flow forces, allows for at least partial movement of fluid dependent on the stage of the cycle of the working chamber with which the valve assembly is associated. The stage of the cycle of the working chamber refers to the stroke of the cycle, such as intake stroke or exhaust stroke, of the working chamber with which the valve assembly is associated.

It may be that the valve member is moveable into a position, in the second operating configuration, depending on a combination of flow forces and at least a force exerted by the first resiliently deformable member (and potentially other components of the valve assembly). It may be that the first resiliently deformable member exerts a mechanical biasing force in the second operating configuration (e.g. a spring bias force). The mechanical biasing force may oppose or correspond to the direction of the flow forces on the valve member depending on the stage of the working chamber cycle. It may be that the valve member is moveable into a position, in the second operating configuration, depending on the force exerted by the first resiliently deformable member in addition to the flow forces of the hydraulic fluid. The force exerted by the first resiliently deformable member in the second operating configuration may cause the valve member to exhibit the third positional default. It may be that the first resiliently deformable member is intentionally arranged to oppose the flow forces acting on the valve member.

In some examples, the second and third positional defaults may be the same position (e.g. the second position - the closed valve state).

Advantageously, the valve assembly is adaptable to cause a desired positional default of the valve member when the first and/or second control signals are applied and when the first and second control signals are not applied. Therefore, the valve assembly can be configured such that, in operation of the valve assembly in the second operating configuration, fluid forces may be capable of closing (or opening) the valve member (by overcoming secondary forces or mechanical biasing of the valve member) to cause net movement of fluid out of (or into) the working chamber.

It may be that the valve assembly comprises a first resiliently deformable member, configured to exert a force (e.g. tension from elastic potential energy) on the valve member (e.g. via the first armature). The first resiliently deformable member may cause the valve member to exhibit the first positional default (e. g. the first position - which may be an open position). It may be that the flow forces of the fluid are sufficient to overcome the tension from the elastic potential energy of the resiliently deformable member when there are no (or low) control signals, i.e. no (or insufficient) electromagnetic force acting on the valve assembly. Therefore, the valve member may move into a different position to the first position, and may move towards, or into the second positional default (e.g. the second position - which may be a closed position) when the force exerted by the first resiliently deformable member is overcome by the fluid flow forces. In this way, the net (e.g. resultant) force acting on the valve member may be formed of multiple forces, such as the fluid flow forces and the force exerted by the first resiliently deformable member.

It may be that, in the first operating configuration, in response to the second control signal, the first armature moves towards the second armature, thus causing resilient deformation of the resiliently deformable member, to thus urge the second armature to potentially correspondingly move. This movement of the first armature is linked directly to movement of the valve member, thus causing the valve member to move towards the second positional default.

The term "urge" is intended to refer to the exertion of forces on the valve member to drive the valve member towards the first position or the second position in the first or second direction. It may be that, when the second control signal is applied, the first armature may move upwards, away from the valve member and towards the second armature, to cause compression of the first resiliently deformable member.

It may be that the second operating configuration corresponds to at least one of: an absence of the first control signal and the second control signal, and a failure associated with at least one of the first control signal and the second control signal. The valve assembly may operate in the second operating configuration when the first control signal and the second control signal are not present and/or when at least one of the first control signal and the second control signal are present but associated with a failure, which may be an error. For example, the first control signal and/or the second control signal may be determined to be invalid or inaccurate. The valve assembly may be configured to operate in the second operating configuration in response to determining that the first control signal and/or the second control signal are absent, invalid or inaccurate. In the second operating configuration, the (e.g. low pressure) valve may be configured to be closed by the flow forces at the beginning of the exhaust stroke to cause the machine to pump fluid. It will be appreciated that the first control signal and/or the second control signal may be associated with another failure which prevents the valve assembly from being able to operate in the first operating configuration (e.g. a "normal" operating configuration).

Advantageously, operation of the valve assembly in the second operating configuration acts as a "failsafe" operating configuration of the valve assembly and the hydraulic machine. The valve member is moveable depending on flow forces which allows for, part or full stroke, pumping (or motoring) in the event of an interruption to the first operating configuration due to absence or failure of the first and/or second control signals. This is particularly important where the supply of fluid is safety critical at times of electrical or controller failure, for example in application to a vehicle steering system.

The first control signal and the second control signal are control signals to control an electrical component of the valve assembly. For example, the first control signal and the second control signal may be indicative of a current (e.g. amperage) to be applied to the first coil.

In the first operating configuration, both the first control signal and the second control signal may be applied at the same time (i.e. simultaneously) or the first and control signals may be applied one at a time.

It may be that the second control signal is applied as an increase to the first control signal. Typically, when the control signals are indicative of a variable for controlling a component of the valve assembly (e.g. the first coil), the value of the variable of the second control signal may be greater than the value of the variable of the first control signal. It may be that the first control signal and the second control signal are both applied to the first coil. That is, the second control signal may also be a coil current. When the first control signal is a first coil current and the second control signal is an increase of the first control signal, the second control signal is an increase of the first coil current.

For example, when the first control signal and the second control signal are indicative of a current to be applied to the same coil of the valve assembly, the first control signal may be indicative of a lower current than the second valve control signal. Typically, the first control signal may be applied to the first coil. The first control signal may be indicative of a current greater than 0.1A, greater than 0.25A, greater than 0.5A, greater than 0.6A or greater than 0.75A. The first control signal may be indicative of a current less than 2.5A, less than 2A, less than 1.5A, less than 1.25A or less than 1A. Typically, the second control signal may be indicative of a current greater than 1A, greater than 1.5A, greater than 2A, greater than 2.5A or greater than 3A. The second control signal may be indicative of a current less than 15A, less than 12A, less than 10A, or less than 8A.

That is, when the second control signal is applied to the first coil, the first coil may exert a force which causes the first armature to be pulled towards a position of the first armature associated with the second positional default of the valve member. In some examples, when the second control signal is applied to the first coil, the first and second armatures are both subject to a force.

The first coil may generate a first electromagnetic field when the first control signal is applied. The first electromagnetic field may comprise first magnetic flux paths which exert the first electromagnetic force on the second armature. The first coil may generate a second electromagnetic field when the second control signal is applied as an increase to the first control signal. The second electromagnetic field may comprise second magnetic flux paths which exert the second resultant electromagnetic force on the first armature. When the second control signal is applied as an increase to the first control signal, both the first and second flux paths may be present meaning that both the first electromagnetic force and the second resultant magnetic force are exerted on the second and first armatures, respectively. As a result, the first electromagnetic force and the second resultant magnetic force are exerted on the second and first armatures, respectively.

For the avoidance of any doubt, it is noted that the term "first coil" is not intended to require the existence of more than one coil, and may, in some examples, refer to the only coil in a valve assembly comprising a single coil.

It may be that applying a second control signal comprises applying a second coil current through a second coil. It may be that the second control signal is applied simultaneously to the first control signal. It may be that the application of the second coil current through the second coil causes the valve member to exhibit the second positional default. In other words, flow of current through the second coil causes the second coil to exert the second resultant electromagnetic force, which acts on the first armature, as a result of which the valve member exhibits the second positional default.

Typically, when the second control signal is applied, a second resultant electromagnetic force is exerted by the second coil on the first armature. The second electromagnetic force causes the first armature to move towards the second armature, which is typically located, relative to the valve member, further away than the first armature. That is, when the one or more second control signals are applied, the first and second armatures may move towards one another. As such, when the second armature moves towards the first armature, the valve member may also move towards the second armature. This movement of the valve member towards the second armature means there is relative smaller amount of flux passing through the second armature, which creates an upwards force less than the downwards force applied to it by the resiliently deformable member, which may correspond to the valve member moving into a closed valve state. As a result, the first resiliently deformable member between the first and second armatures may be further deformed (e.g. compressed).

The second control signal may be applied simultaneously to the first control signal, in that both the first control signal and the second control signal are two separate control signals (e.g. for applied to two different components) that are applied at the same time. For example, the first control signal may be indicative of a current to be applied to the first coil and the second control signal may be indicative of a current to be applied to the second coil. In this example, the first control signal may be indicative of a current greater than 0.1A, greater than 0.25A, greater than 0.5A, greater than 0.6A or greater than 0.75A. The first control signal may be indicative of a current less than 2.5A, less than 2A, less than 1.5A, less than 1.25A or less than 1A. In this example, the second control signal may be indicative of a current greater than 0.1A, greater than 0.25A, greater than 0.5A, greater than 0.6A or greater than 0.75A. The second control signal may be indicative of a current less than 2.5A, less than 2A, less than 1.5A, less than 1.25A or less than 1A.

When a current is applied to the second coil, a magnetic field may be generated which indirectly causes movement of the valve member by exerting an electromagnetic force on the first armature.

It may be that, when the second control signal is applied and the valve member exhibits the second positional default, the second resultant electromagnetic force exerted on the first armature is not overcome by the flow forces at any stage during the working chamber cycle. In other words, when the second control signal is applied and the valve member exhibits the second positional default, the valve member may be constantly held in that position despite flow forces acting on the valve member.

It may be that an end of the first resiliently deformable member is rigidly connected relative to the valve member. It may be that the first resiliently deformable member is a spring.

Typically, the first resiliently deformable member is rigidly connected relative to the valve member such that movement of the first resiliently deformable member causes movement of the valve member. It may be that when the valve member exhibits the first positional default, the first resiliently deformable is compressed. It may be that when the valve member exhibits the second positional default, the first resiliently deformable member is further compressed. It may be that the first resiliently deformable member is compressed when the second control signal is applied.

It may be that the valve assembly further comprises a second resiliently deformable member. The second resiliently deformable member may be resiliently deformable to urge the valve member towards the second position corresponding to the third positional default in the second operating configuration. The valve assembly may comprise a stopping member to limit movement of the second resiliently deformable member.

It may be that the second resiliently deformable member is positioned between the stopping member and the first armature. Typically, the second resiliently deformable member may be resiliently deformed when the valve member exhibits the first and second positional defaults. Typically, the second resiliently deformable member may not be deformed when the valve member exhibits the third positional default. The second resiliently deformable member may be positioned to exert a force on the first armature when the valve assembly is operating in the second operating configuration. That is, the second resiliently deformable member may exert a force on the first armature which may oppose the force exerted on the valve member by flow forces. The second resiliently deformable member may be resiliently deformed (e.g. compressed) when flow forces are exerted on the (e.g. low pressure) valve member during an exhaust stroke of the working chamber with which the valve is associated. The second resiliently deformable member may not be resiliently deformed (e.g. may be relaxed) when flow forces are exerted on the (e.g. low pressure) valve member during an intake stroke of the working chamber to which the valve member is attached.

It may be that the stopping member prevents further movement of (e.g. a component of) the valve assembly. The second resiliently deformable member may be compressed between the stopping member and the second armature when the valve assembly operates in the first operating configuration. It may be that when the valve assembly operates in the second operating configuration, the second resiliently deformable is not compressed.

It may be that the first resiliently deformable member has a first modulus of resilience greater than a second modulus of resilience of the second resiliently deformable member.

It may be that the first and second resiliently deformable members are first and second springs, respectively. It may be that the first spring has a higher spring constant than the second spring.

An aspect of the invention provides a controller for a valve assembly as described above. The controller may be configured to perform the method as described above.

An aspect of the invention provides a hydraulic fluid machine comprising the valve assembly described above and the controller described above.

It may be that the hydraulic fluid machine comprises a hydraulic machine having a rotatable shaft in driven engagement with a prime mover and comprising at least one working chamber having a volume which varies cyclically with rotation of the rotatable shaft, the at least one working chamber comprising the electronically actuated valve assembly which regulates the flow of hydraulic fluid between the working chamber and a manifold. It may be that, in the first operating configuration, the valve member is moveable into a position determined by an actuator comprising the first coil, the first armature and the second armature, to cause active and inactive cycles of the at least one working chamber on demand. It may be that, in the second operating configuration, the valve member is moveable into a position, at least in part, determined by flow forces acting on the valve member, to cause an active pumping cycle of the at least one working chamber.

It may be that the hydraulic fluid machine operates in the following modes depending on the valve topology (i.e. the components of the valve assembly) and the applied control signals.

| Valve topology | Idle mode | Pump mode | Self-pump mode |
|---|---|---|---|
| First coil, second coil, first armature and second armature. | First control signal is applied (i.e. a current is applied to the first coil). | First control signal is applied and the second control signal is applied (i.e. a current is applied to the first coil and a current is applied to the second coil). | Neither the first nor the second control signals are applied to either coil (i.e. no current to either coil). |
| First coil, first armature and second armature. | First control signal is applied (i.e. a low current is applied to the first coil). | The second control signal is applied (i.e. a high current is applied to the first coil). | Neither the first nor the second control signal are applied to the first coil. |

In the idle mode, the resultant bias force of the valve (e.g. valve member) primarily due to the electromagnetic force may be directed towards the open position of the valve. In the pump mode, the resultant bias force of the valve (e.g. valve member) primarily due to the electromagnetic force may be directed towards the closed position of the valve. In the self-pump mode, the valve (e.g. valve member) may be unbiased due to the electromagnetic force. However, the valve (e.g. valve member) may biased primarily due to another force, such as a spring force.

It may be that the valve assembly is included in a hydraulic machine and the hydraulic machine is operable in a first state in which valve member is held open, thereby causing the hydraulic machine to idle. The hydraulic machine may be operable in a second state in which the relative phasing of the shaft is taken into account to operate the machine to perform a pumping stroke. The hydraulic machine may be operable in a third state in which a position of the valve member is determined by the flow forces, which on the exhaust stroke of the hydraulic machine, cause the valve member to close thus precipitating a pumping stroke (e.g. `self-pumping').

Typically, the controller may be configured to determine which of the first control signal and the second control signal is to be generated in the first operating configuration. Typically, the controller may be configured to control the valve assembly in the first operating configuration based on said determination.

The controller may determine which control signal to generate depending on a variable associated with the hydraulic apparatus. The controller may determine a measured variable associated with the hydraulic apparatus. The controller may determine which control signal to generate by comparing a measured value of the variable to an expected value of the variable based on historic or prestored data.

Typically, the controller may be configured to control the valve assembly in the first operating configuration based on a received input signal indicative of a phase of a rotatable shaft of the hydraulic machine. That is, phase of the rotatable shaft of the hydraulic machine can be taken into account when determining the timing of the first control signal using when the valve assembly is operating in the first operating configuration. The controller may determine whether the received input signal indicative of the phase of the rotatable shaft is present and/or accurate. If the controller determines that the received input signal is present and/or accurate, the controller may determine to operate in the first operating configuration. If the controller determines that the received input signal is not present and/or accurate, the controller may determine not to operate in the first operating configuration, and to operate the valve assembly in the second operating configuration.

### Description of the Drawings

An example embodiment of the present invention will now be illustrated with reference to the following Figures in which:
Figures 1, 2, 3, 5, 6, 7 and 8 are schematic diagrams of valve assemblies according to aspects of the invention;
Figure 4 is a graph representative of control signals according to an aspect of the invention;
Figures 9 and 10 are flowcharts illustrating a method according to an aspect of the invention;
Figure 11 is a schematic diagram of a controller according to an aspect of the invention; and
Figure 12 is a schematic diagram of a hydraulic apparatus according to an aspect of the invention.

### Detailed Description of an Example Embodiment

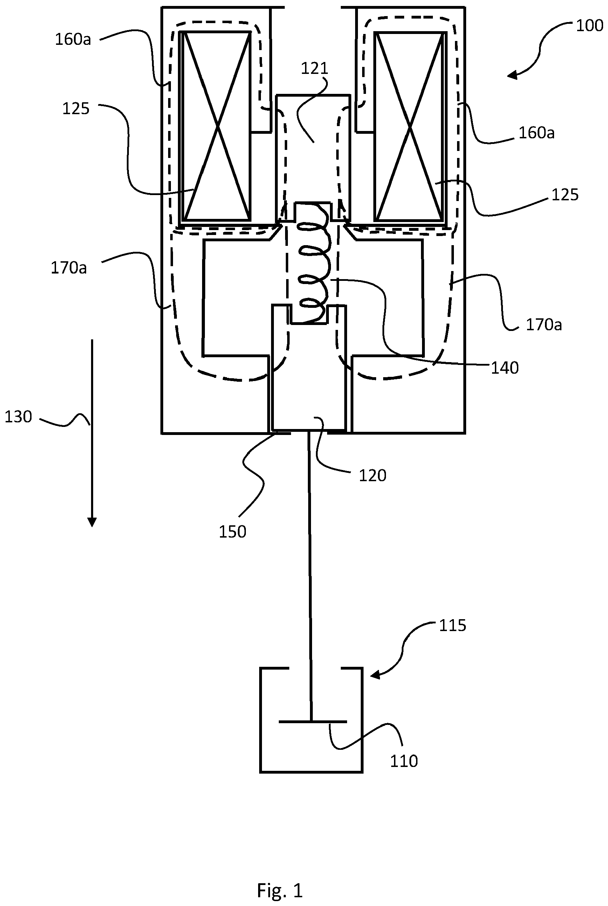

Figure 1 illustrates a valve assembly according to an aspect of the invention indicated generally by reference numeral 100. The valve assembly 100 is an electronically actuated valve. The valve assembly 100 comprises a valve member 110, shown in a open state (i.e. a first position 115), which is a first positional default. The valve assembly 100 comprises a first armature 120 and a second armature 121. A first coil 125 is shown surrounding the second armature 121. The first armature 120 and the second armature 121 are coupled by a spring 140, functioning as a first resiliently deformable member.

The valve assembly 100 is shown operating in a first operating configuration. As mentioned above, the valve member 110 is in the open state to allow fluid to flow from a low-pressure manifold into a working chamber associated with the valve assembly during an intake stroke. The valve assembly 100 is shown when a first control signal is applied to the first coil 125. In the valve assembly 100, the first control signal is applied as a first coil current through the first coil 125. The first coil current causes an electromagnetic force to be exerted on the second armature 121 to cause the second armature 121 to move in the direction shown by arrow 130 to cause the valve member 110 to exhibit the first positional default 115 as shown in Figure 1. In other words, the second armature 121 is forced downwards, towards the first armature 120, thereby compressing the spring 140. The first armature 120 is also pushed downwards but movement of the first armature 120 is restricted by a shelf 150, functioning as a stopping member. When the first coil current is applied to the first coil 125, the first armature 120 contacts the shelf 160 when exhibiting the first positional default 115, thereby restricting further movement of the first armature 120 and therefore the valve member 110. The valve member 110 is shown in the open state 115 as a result of the first and second magnetic flux paths 160a, 170a. The first magnetic flux path 160a has more flux passing through than the second magnetic flux path 170a, which causes the second armature 121 to be positioned as shown in Figure 1.

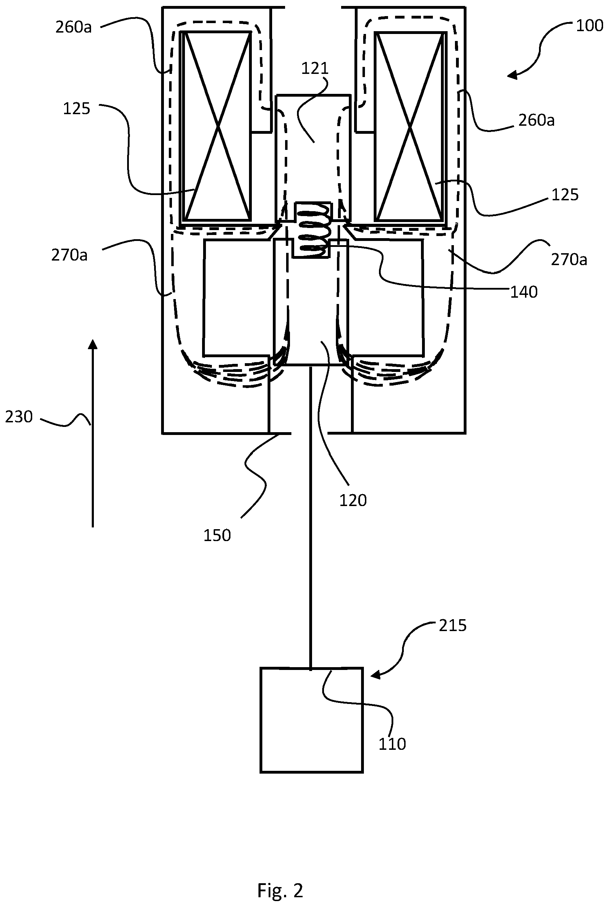

Figure 2 also illustrates the valve assembly 100 shown operating in a first operating configuration. However, in Figure 2, the valve member 110 is shown exhibiting a second positional default 215. The second positional default 215 is associated with a second valve state, which is a closed state. It is clear that the valve member 110 has moved in the direction indicated by arrow 230 when moving from the first positional default to the second positional default, thereby closing the valve. The valve assembly 100 is shown when a second control signal, which is an increase to or of the first control signal (i.e. a current of a higher value) is applied to the first coil 125. In the valve assembly 100, the second control signal is applied as a higher coil current through the first coil 125. The higher coil current exerts a resultant electromagnetic force in the direction of the arrow 230 on the first armature 120 to cause the valve member 110 to exhibit the second positional default 215, as shown in Figure 2 because the first and second armatures 120, 121 move towards one another and compress the spring 140. When the higher current is applied, the force on the first armature arising from the second magnetic flux path 270a overcomes the counteracting spring force from the spring 140 which otherwise causes the first armature 120 to be positioned as shown in Figure 1.

In summary, when the first coil current is applied as the first control signal as in Figure 1, the second armature 121 is pulled down towards the shelf 150, which causes the first armature 120 to move downwards towards the shelf 150 by compression of the spring 140. This causes the valve member 110 to exhibit the first positional default 115. When the second coil current is applied as the second control signal as in Figure 2, the first armature 120 is pulled upwards towards the second armature 121. This movement is caused by saturation of flux passing broadly radially via the central part (the downforce on the first armature 120 isn't further increasing, and the additional flux passes through the second armature 121 in the axial direction), thus increasing its upward force, which overcomes the counteracting spring force provided by the spring 140. As a result, the valve member 110, which is coupled to the first armature 120 is caused to exhibit the second positional default 215 towards the closed position.

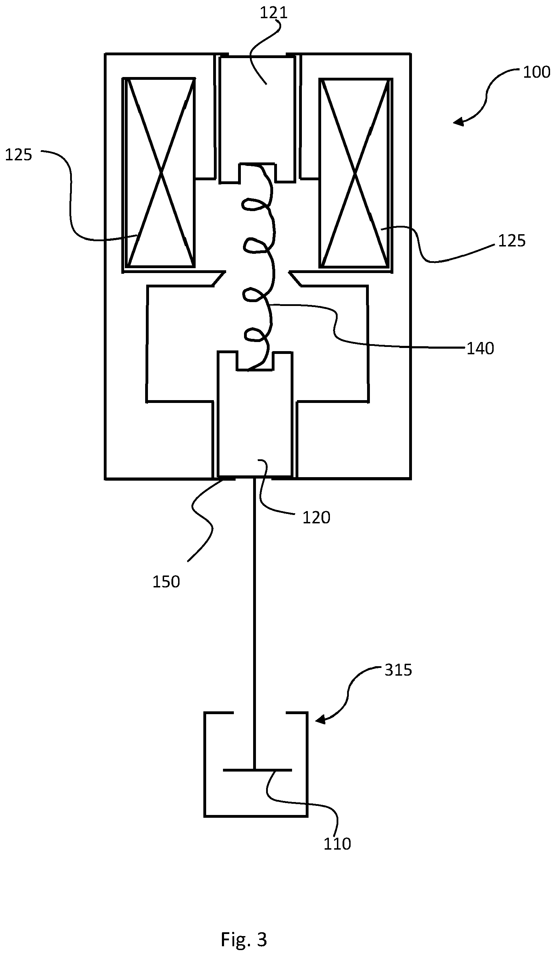

Figure 3 illustrates the valve assembly 100 operating in a second operating configuration. In Figure 3, the valve member 110 is shown exhibiting a third positional default 315. As a result of there being no control signals applied to the first coil 125, there is no electromagnetic force exerted by said coil. Thus each armature is not subject to electromagnetic force, and is subject primarily only to spring force. The spring 140 pushes the second armature 121 upwards and the first armature 120 rests on the shelf 150. At this point, the valve member 110 is unbiased (although small, insignificant spring forces may be present) and so the third positional default 315 is unbiased. The valve assembly 100 is for a low-pressure valve, so when the working chamber to which the valve assembly 100 is attached is in the intake stroke, the flow forces arising from the flow of fluid through the low-pressure manifold into the working chamber keeps the valve member in the open state. When the working chamber to which the valve assembly 100 is attached is in the pumping-based exhaust stroke, the fluid flow forces acting on the valve member at around bottom dead centre of the piston/cylinder chamber cycle, move the valve member 110 into the closed state, and thus as a result there is no flow of fluid from the working chamber to the low-pressure manifold because the fluid flows from the working chamber to a high-pressure manifold..

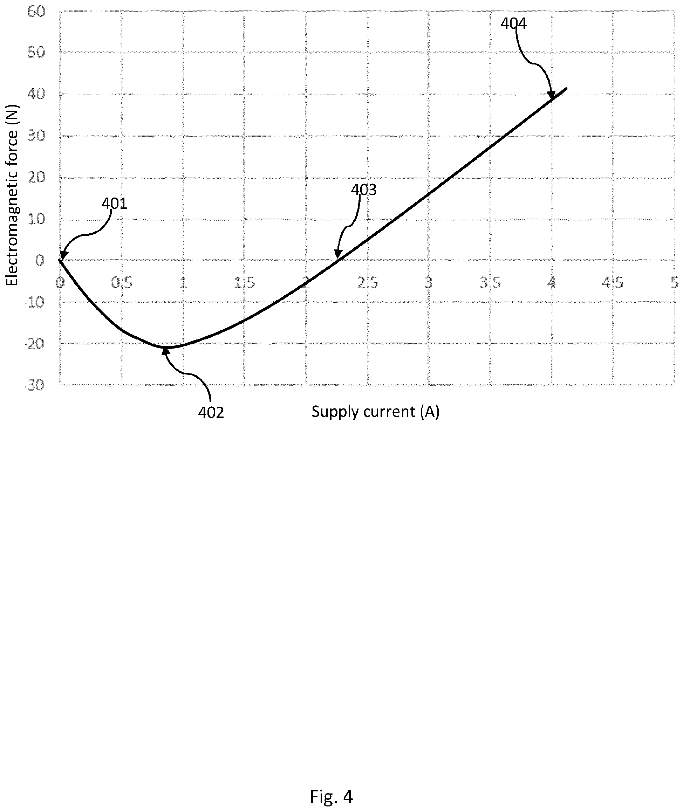

Figure 4 represents the respective first and second control signals applied to the valve assembly 100 illustrated in Figures 1 and 2.

At point 401, no current is applied to the first coil 125 so no electromagnetic force is exerted on the second armature 121. Point 401 represents when the valve assembly 100 operates in the second operating configuration. The position of the valve member 110 does not depend on the application of a current to the first coil 125. At point 401, the valve member 110 is freely moveable in the sense that its movement is not influenced by magnetic force, but could be influenced by spring force, and the position of the valve member may be influenced by flow forces of the hydraulic fluid.

The point 402 represents a current of the first control signal. At point 402, shown as approximately 0.8A, a force is exerted on the second armature 121, which causes the second armature to move towards the valve member, the force being transferred via the spring 140, and exceeds the force of the first armature in the opposing direction and to thereby hold the valve member in the first positional default. At a higher current, there is a point 403, at which the electromagnetic forces exerted on the first and second armatures 120, 121 are balanced. At current 404, the force exerted on the first armature 120 is sufficient to pull the first armature 120 upwards towards the second armature 121, by exceeding the downwards forces, thereby causing the valve member to exhibit the second positional default. As such, the current 404 represents the second control signal.

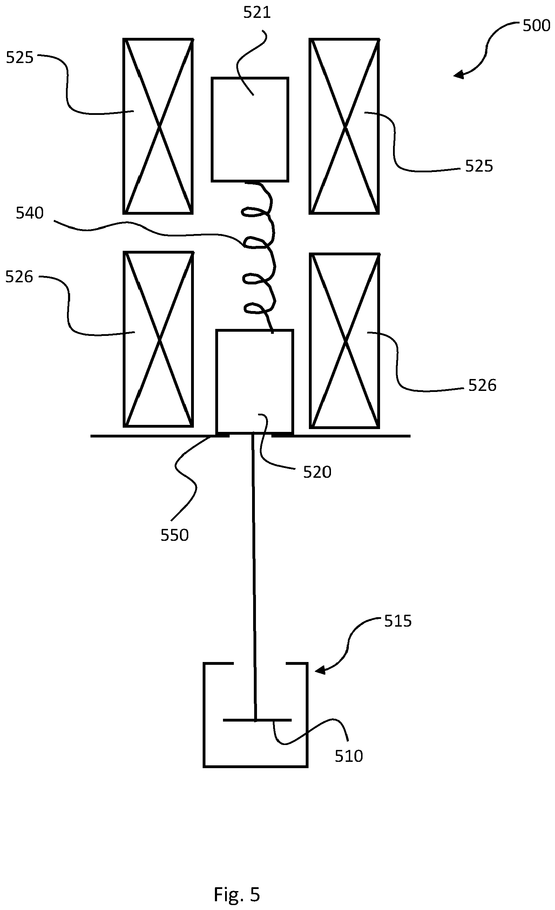

Figure 5 illustrates a valve assembly according to an aspect of the invention indicated generally by reference numeral 500. The valve assembly 500 is an electronically actuated valve. The valve assembly 500 is a low-pressure valve. However, it will be appreciated that the valve assembly 500 may be configured as a high-pressure valve. The valve assembly 500 comprises an actuator and a valve member 510. The valve assembly 500 is shown operating in a first operating configuration. The valve member 510 is shown exhibiting a first positional default 515. The first positional default 515 is associated with a first valve state, which is an open state, and a first position.

The valve assembly 500 is shown when a first control signal is applied to the first coil 525. The first coil 525 is positioned above a second coil 526. When the first control signal is applied to the first coil 525, a force is exerted on a second armature 521. The second armature 521 is positioned above the first armature 520. The first armature 520 is coupled to the second armature 521 by way of a spring 540. When the first control signal is applied to the first coil 525, the second armature 521 is caused to move down towards the first armature 520. An electromagnetic force is exerted on the first armature 520 which causes the first armature 520 into a position of the first armature 520 associated with the first positional default 515 of the valve member 510, as shown in Figure 5. The movement of the first armature 520 is restricted by the shelf 550. The movement of the first armature 520 towards the shelf 550 causes the valve member 510 to exhibit the first positional default.

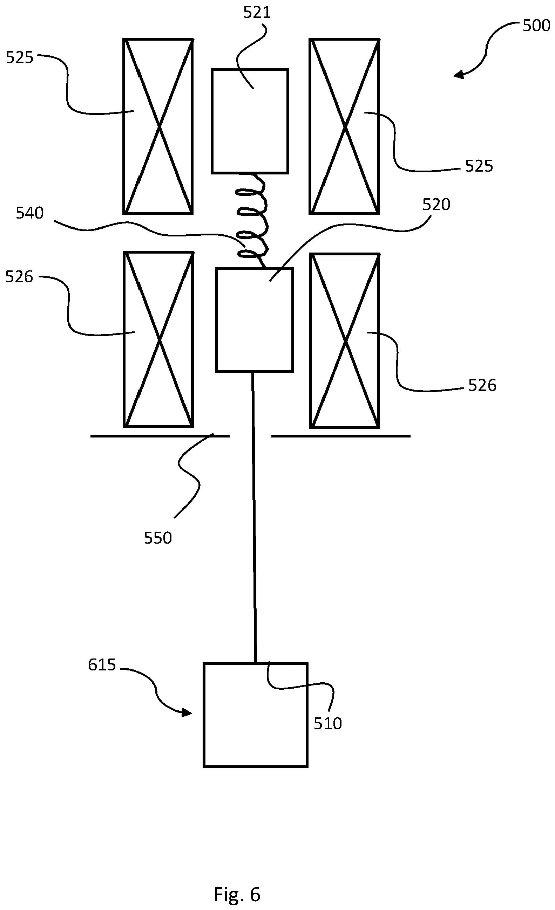

Figure 6 illustrates the valve assembly 500 according to an aspect of the invention also operating in a first operating configuration. The valve member 510 is shown exhibiting a second positional default 615. The second positional default 615 is associated with a second valve state, which is a closed state, and in a second position. The valve assembly 500 as illustrated in Figure 6 shows when a second control signal, is applied as a current to the second coil 526 simultaneously to a current applied as the first coil 525.

When the second control signal is applied to the second coil 526, a force is exerted on a first armature 520 which causes the first armature 520 to move up towards the second armature 521. A resultant electromagnetic force is exerted on the first armature 520 which causes the first armature 520 to move into a position of the first armature 520 associated with the second positional default 615 of the valve member 510, thereby causing the valve member 510 to move into the closed state.

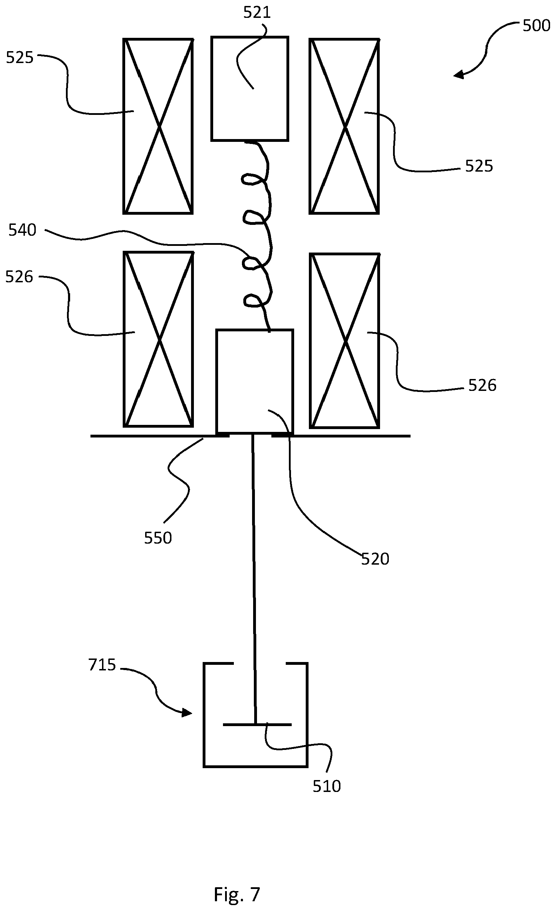

Figure 7 illustrates the valve assembly 500 operating in a second operating configuration. In Figure 7, the valve member 510 is shown exhibiting a third positional default 715. As a result of there being no control signals applied to the first coil 525 or the second coil 526, there is no electromagnetic force exerted on either the first armature 520 or the second armature 521. This means that the spring 540 has no compressive forces acting upon it and it can therefore relax. The spring 540 pushes the second armature 521 upwards and the first armature 520 rests on the shelf 550. At this point, the valve member 510 is unbiased and so the third positional default 515 is unbiased. The valve assembly 500 is for a low-pressure valve, so when the working chamber to which the valve assembly 500 is attached is in the intake stroke, the flow of fluid through the low-pressure manifold into the working chamber keeps the valve member in the open state. When the working chamber to which the valve assembly 500 is attached is in the pumping-based exhaust stroke, the fluid flow forces move the valve member 510 into the closed state, and as a result there is no flow of fluid from the working chamber to the low-pressure manifold because the fluid flows from the working chamber to a high-pressure manifold.,

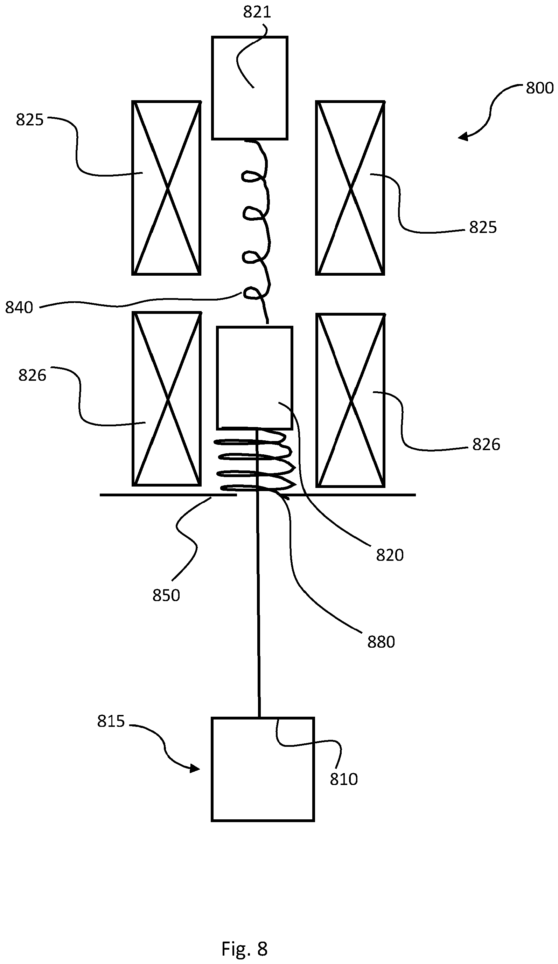

Figure 8 illustrates a valve assembly 800 operating in a second operating configuration. The valve assembly 800 is the same as the valve assembly 500 with the addition of a second spring 880. In Figure 8, the valve member 810 is shown exhibiting a third positional default 815. The third positional default 815 is associated with a second valve state, which is a closed state and is the same as the second positional default 615. As a result of there being no control signals applied to the first coil 825 or the second coil 826, there is no electromagnetic force exerted on either the first coil 825 or the second coil 826. This means that the spring 840 has no compressive forces acting upon it and it can therefore relax. The spring 840 pushes the second armature 521 upwards. However, the presence of the second spring 880 between the shelf 850 and the first armature 820 means that the second spring 880 pushes the first armature 820 upwards. This means that third positional default is not unbiased, and is instead the same as the second positional default 615 (i.e. the closed state). Therefore, with the addition of a spring, it is possible to bias the valve assembly 800 into a closed state even when no control signal is applied to either the first or second coil.

It will be appreciated that a second spring could also be added to the valve assembly 100 which comprises a single coil (i.e. the first coil 125), between the shelf 150 and the first armature 120. In this case, the valve member 110 exhibits a third positional default (associated with a second valve state) when no control signal is applied to the first coil 125 so the spring 140 pushes the second armature 121 upwards and the second spring pushes the first armature 120 upwards.

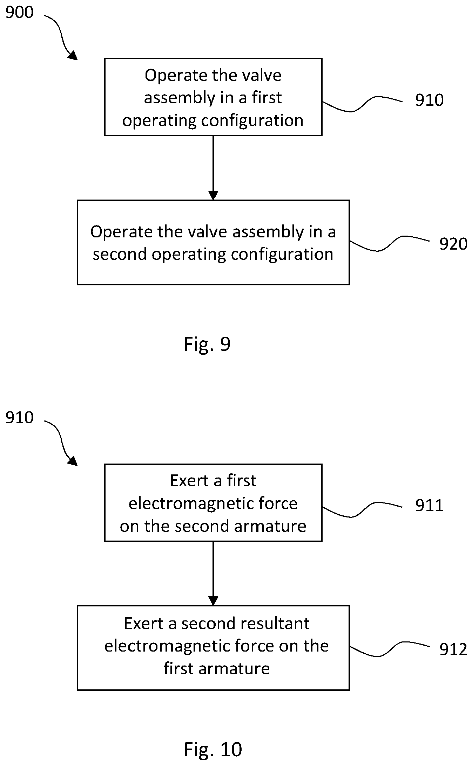

Figures 9 and 10 illustrate a flowchart of methods according to an aspect of the present invention. The method 900 comprises operating 910 a valve assembly in a first operating configuration and operating 920 the valve assembly in a second operating configuration. As shown in Figure 10, the method step 910 comprises exerting 911 a first electromagnetic force on the second armature. This causes the valve assembly to be positioned as shown in Figure 1 and Figure 5. The method step 910 also comprises exerting 912 a second resultant electromagnetic force on the first armature. This causes the valve assembly to be positioned as shown in Figure 2 and Figure 6. The method step 920 comprises causing the valve member to exhibit a third positional default, different from the first positional default. This causes the valve assembly to be positioned as shown in Figure 3, 7 or 8.

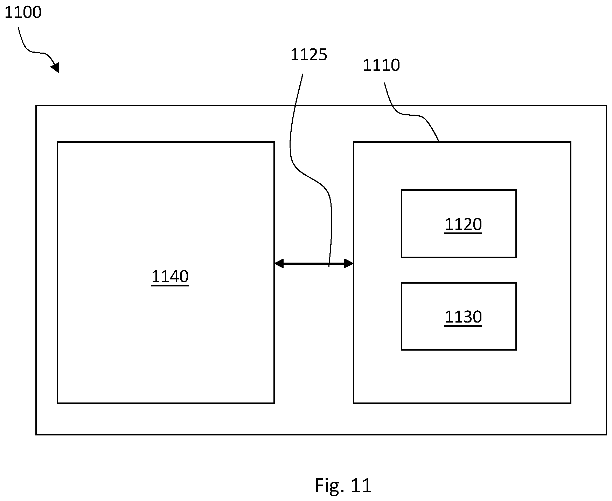

Figure 11 is a schematic illustration of a controller 1110 in accordance with an aspect of the present invention. The controller 1110 comprises one or more processors 1120 and a non-transitory computer readable memory 1130. The non-transitory computer readable memory 1130 stores instructions which, when executed by the one or more processors 1120, causes operation of the methods described herein. The controller 1110 is part of the hydraulic apparatus 1100. The controller 1110 exchanges and/or transmits data and/or control signals 1125 with other components 1140 of the hydraulic apparatus 1100.

In this example, the controller 1110 transmits the first control signal and the one or more second control signals to one or more electronically actuated valves, being among the other components 1140 of the hydraulic apparatus 1100. The controller 1110 causes the operation of the one or more electronically actuated valves in the first operating configuration. Alternatively, the controller 1110 may be separate to the hydraulic apparatus 1100 or distributed between the hydraulic apparatus 1100 and a device external to the hydraulic apparatus 1100. The controller 1110 may exchange and/or transmit data and/or control signals with components external to the hydraulic apparatus 1100.

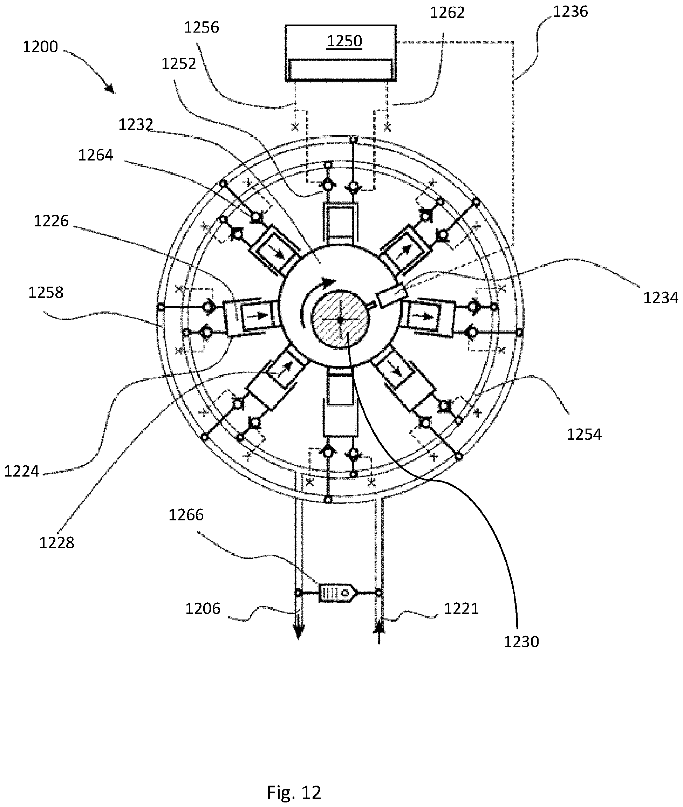

Figure 12 is a schematic diagram of part of a hydraulic apparatus, and shows a single group of working chambers currently connected to one or more hydraulic components (e.g. an actuator) through a high pressure manifold 1258. Figure 12 provides detail on the first group 1200, said group comprises a plurality of working chambers (8 are shown) having cylinders 1224 which have working volumes 1226 defined by the interior surfaces of the cylinders and pistons 1228 (providing working surfaces) which are driven from a rotatable shaft 1230 by an eccentric cam 1232 and which reciprocate within the cylinders to cyclically vary the working volume of the cylinders. A group may comprise plural working chambers which cycle in volume from reciprocation motion of pistons, said pistons in driving relationship with more than one eccentric cam (only one cam is shown in the diagram). A shaft position and speed sensor 1234 sends electrical signals through a signal line 1236 to a controller 1250, which thus enables the controller to determine the instantaneous angular position and speed of rotation of the shaft, and to determine the instantaneous phase of the cycles of each cylinder.

The working chambers are each associated with Low Pressure Valves (LPVs) in the form of electronically actuated face-sealing poppet valves 1252, which have an associated working chamber and are operable to selectively seal off a channel extending from the working chamber to a low-pressure hydraulic fluid manifold 1254 (or just `low-pressure manifold'), which may connect one or more working chambers, to the low-pressure hydraulic circuit. The LPVs are normally open solenoid actuated valves which open passively when the pressure within the working chamber is less than or equal to the pressure within the low-pressure manifold, i.e. during an intake stroke, to bring the working chamber into fluid communication with the low-pressure manifold but are selectively closable under the active control of the controller via LPV control lines 1256 to bring the working chamber out of fluid communication with the low-pressure manifold. The valves may alternatively be normally closed valves. As well as force arising from the pressure difference across the valve, flow forces from the transmission of fluid through the valve past the moving valve member, also influence the net force on the moving valve member.

The working chambers are each further associated with a respective High-Pressure Valve (HPV) 1264 each typically in the form of a pressure actuated delivery valve. The HPVs open outwards from their respective working chambers and are each operable to seal off a respective channel extending from the working chamber through a valve block to a high-pressure hydraulic fluid manifold 1258 (or just 'high-pressure manifold'), which may connect one or more working chambers. The HPVs are each typically embodied in the form of a normally-closed pressure-opening check valve which open passively when the pressure within the working chamber exceeds the pressure within the high-pressure manifold. The HPVs may also be embodied, when the hydraulic machine needs to operate as a motor, as normally-closed solenoid actuated check valves which the controller may selectively hold open via HPV control lines 1262 once the pressure difference and balance of forces across the HPV permits.

In a pumping mode, the controller selects the net rate of displacement of hydraulic fluid from the working chamber to the high-pressure manifold by the hydraulic machine by actively closing one or more of the LPVs typically near the point of maximum volume in the associated working chamber's cycle, closing the path to the low-pressure manifold and thereby directing hydraulic fluid out through the associated HPV on the subsequent contraction stroke. The controller selects the number and sequence of LPV closures and HPV openings to produce a flow or create a shaft torque or power to satisfy a selected net rate of displacement.

In a motoring mode of operation, the controller selects the net rate of displacement of hydraulic fluid, displaced via the high-pressure manifold, actively closing one or more of the LPVs shortly before the point of minimum volume in the associated working chamber's cycle, closing the path to the low-pressure manifold which causes the hydraulic fluid in the working chamber to be compressed by the remainder of the contraction stroke. The associated HPV opens when the pressure across it equalises and a small amount of hydraulic fluid is directed out through the associated HPV, which is held open by the controller. The controller then actively holds open the associated HPV, typically until near the maximum volume in the associated working chamber's cycle, admitting hydraulic fluid from the high-pressure manifold to the working chamber and applying a torque to the rotatable shaft.

In normal operation, the active and inactive cycles of working chamber volume are interspersed to meet the demand indicated by the hydraulic machine control signal. Arrows on the low pressure fluid connection 1206, and the high-pressure fluid connection 1221 indicate hydraulic fluid flow in the motoring mode; in the pumping mode the flow is reversed. A pressure relief valve 1266 may protect the first group from damage.

In general, the present invention relates to an electronically actuated valve assembly (100, 500, 800) comprising: a valve member (110, 510, 810) moveable between a first position corresponding to a first valve state and a second position corresponding to a second valve state; a first resiliently deformable member (140, 540, 840); a first coil (125, 525, 825) configured to cause the valve member to exhibit a first positional default (115, 515); a first armature (120, 520, 820) moveable relative to the first coil to thereby cause movement of the valve member; and a second armature (121, 521, 821) movable relative to the first coil and arranged to cause movement of the valve member via the first resiliently deformable member, wherein, in a first operating configuration of the valve assembly: the first coil is configured to, on application of a first coil current therethrough as a first control signal, exert a first electromagnetic force on the second armature to thereby cause the first resiliently deformable member to cause the valve member to exhibit the first positional default; and the valve assembly is configured to, on application of a second control signal, exert a second resultant electromagnetic force on the first armature to thereby cause the valve member to exhibit a second positional default (215, 615), and wherein, in a second operating configuration of the valve assembly: the valve assembly is configured to cause the valve member to exhibit a third positional default (315, 715, 815), different from the first positional default.

Throughout the description and claims of this specification, the words "comprise" and "contain" and variations of them mean "including but not limited to", and they are not intended to and do not exclude other components, integers, or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, or groups described in conjunction with a particular aspect, embodiment, or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. An electronically actuated valve assembly comprising:
a valve member moveable between a first position corresponding to a first valve state and a second position corresponding to a second valve state;
a first resiliently deformable member;
a first coil configured to cause the valve member to exhibit a first positional default;
a first armature moveable relative to the first coil to thereby cause movement of the valve member; and
a second armature movable relative to the first coil and arranged to cause movement of the valve member via the first resiliently deformable member,
wherein, in a first operating configuration of the valve assembly:
the first coil is configured to, on application of a first coil current therethrough as a first control signal, exert a first electromagnetic force on the second armature to thereby cause the first resiliently deformable member to cause the valve member to exhibit the first positional default; and
the valve assembly is configured to, on application of a second control signal, exert a second resultant electromagnetic force on the first armature to thereby cause the valve member to exhibit a second positional default, and
wherein, in a second operating configuration of the valve assembly:
the valve assembly is configured to cause the valve member to exhibit a third positional default, different from the first positional default.

2. A method of operating an electronically actuated valve assembly, the valve assembly comprising:
a valve member moveable between a first position corresponding to a first valve state and a second position corresponding to a second valve state;
a first resiliently deformable member;
a first coil configured to cause the valve member to exhibit a first positional default;
a first armature moveable relative to the first coil to thereby cause movement of the valve member; and
a second armature movable relative to the first coil and arranged to cause movement of the valve member via the first resiliently deformable member,
wherein the method comprises:
operating the valve assembly in a first operating configuration; and
operating the valve assembly in a second operating configuration,
wherein, operating the valve assembly in the first operating configuration comprises:
exerting a first electromagnetic force on the second armature, thereby causing the first resiliently deformable member to cause the valve member to exhibit the first positional default, by applying a first coil current to the first coil as a first control signal; and
exerting a second resultant electromagnetic force on the first armature, thereby causing the valve member to exhibit a second positional default, by applying a second control signal; and
wherein, operating in the second operating configuration comprises:
causing the valve member to exhibit a third positional default, different from the first positional default.

3. The valve assembly of claim 1 or the method of claim 2, wherein, in the first operating configuration, in response to the second control signal, the first armature moves towards the second armature to urge the valve member to move towards the second positional default, thereby causing resilient deformation of the first resiliently deformable member.

4. The valve assembly or the method of any preceding claim, wherein an end of the first resiliently deformable member is rigidly connected relative to the valve member; and optionally wherein the first resiliently deformable member is a spring.

5. The valve assembly or the method of any preceding claim, wherein the valve assembly further comprises a second resiliently deformable member, the second resiliently deformable member being resiliently deformable to urge the valve member towards a second position corresponding to the third positional default in the second operating configuration and optionally, comprising a stopping member to reduce movement of the second resiliently deformable member.

6. The valve assembly or the method of claim 5, wherein the first resiliently deformable member has a first modulus of resilience greater than a second modulus of resilience of the second resiliently deformable member.

7. The valve assembly or the method of any preceding claim, wherein either:
the valve assembly comprises a second coil and the second control signal is application of a second coil current therethrough, or
applying a second control signal comprises applying a second coil current through a second coil, optionally wherein the second control signal is applied simultaneously to the first control signal.

8. The valve assembly or the method of any of claims 1 to 6, wherein the second control signal is applied as an increase to the first control signal.

9. The valve assembly or the method of any preceding claim, wherein the second operating configuration corresponds to at least one of:
an absence of the first control signal and the second control signal, and
a failure associated with at least one of the first control signal and the second control signal.

10. The valve assembly or the method of any preceding claim, wherein the first positional default exhibited by the valve member when the first control signal is applied is the first position, and the second positional default exhibited by the valve member when the second control signal is applied is the second position, optionally wherein the first valve state is an open state and the second valve state is a closed state or the first valve state is a closed state and the second valve state is an open state.

11. A controller for a valve assembly as claimed in any of claims 1 to 10, the controller configured to perform the method of any of claims 2 to 10.

12. A hydraulic fluid machine comprising:
the valve assembly of any of claims 1 to 10; and
the controller of claim 11.

13. The hydraulic fluid machine of claim 12, comprising a hydraulic machine having a rotatable shaft in driven engagement with a prime mover and comprising at least one working chamber having a volume which varies cyclically with rotation of the rotatable shaft, the at least one working chamber comprising the electronically actuated valve assembly which regulates the flow of hydraulic fluid between the working chamber and a manifold, wherein, in the first operating configuration, the valve member is moveable into a position determined by an actuator comprising the first coil, the first armature and the second armature, to cause active and inactive cycles of the at least one working chamber on demand, and in the second operating configuration, the valve member is moveable into a position, at least in part, determined by flow forces acting on the valve member, to cause an active pumping cycle of the at least one working chamber.

14. The hydraulic fluid machine of claim 12 or claim 13, or the controller of claim 11, wherein the controller is configured to determine which of the first control signal and the second control signal is to be generated in the first operating configuration, and to control the valve assembly in the first operating configuration based on said determination.

15. The hydraulic fluid machine or the controller of claim 14, wherein the controller is configured to control the valve assembly in the first operating configuration based on a received input signal indicative of a phase of a rotatable shaft of the hydraulic machine.
